# FASCICULE DE BREVET EUROPEEN

(11) **EP 0 915 657 B1**
(45) Date de publication et mention de la délivrance du brevet: **16.01.2002**
(21) Numéro de dépôt: 96922095.3
(22) Date de dépôt: 11.06.1996
(51) Int. Cl.: A01N 53/00

(54) **COMPOSITION INSECTICIDE ET PARASITICIDE AQUEUSE, SON PROCEDE DE FABRICATION ET D'UTILISATION**
INSEKTIZIDE UND ANTIPARASITÄRE WÄSSRIGE ZUSAMMENSETZUNG, VERFAHREN ZU IHRER HERSTELLUNG UND VERWENDUNG
AQUEOUS INSECTICIDE AND PESTICIDE COMPOSITION, METHOD OF PRODUCTION AND USE THEREOF

(43) Date de publication de la demande: 19.05.1999
(73) Titulaire: ATTAVET, 13685 Aubagne (FR)
(72) Inventeur: Attali, Jean-Claude, 13260 Cassis (FR); Vuagnoux, Jean-Claude, 13004 Marseille (FR)
(74) Mandataire: Marek, Pierre
(86) Numéro de dépôt international: FR9600882
(87) Numéro de publication internationale: WO9747198

(56) Documents cités:
- EP-A- 0 215 303
- EP-A- 0 327 467
- DE-A- 2 704 066
- FR-A- 2 729 541
- GB-A- 2 058 569
- CHEMICAL ABSTRACTS, vol. 111, no. 21, 20 Novembre 1989 Columbus, Ohio, US; abstract no. 189599, XP002024189 cité dans la demande & CN 8 703 100 A (JIANGSU INSTITUTE OF PLANTS) 2 Novembre 1988
- K.NAUMANN: "Synthetic Pyrethroid Insecticides: Structures and Properties, vol.4" , SPRINGER , BERLIN, DE XP002024188 cité dans la demande chapter 3.4 'Factors Enhancing the Action of Pyrethroids Against Insects' voir page 110, alinéa 6 voir page 113, alinéa 3
- DATABASE WPI Section Ch, Week 9239 Derwent Publications Ltd., London, GB; Class C03, AN 92-320045 XP002024191 & JP 04 224 502 A (SUMITOMO CHEM CO LTD) , 13 Août 1992
- DATABASE WPI Week 7132 Derwent Publications Ltd., London, GB; AN 71-53154S [32] XP002024192 & JP 46 028 440 A (SANKYO) , 18 Août 1971
- CHEMICAL ABSTRACTS, vol. 85, no. 5, 2 Août 1976 Columbus, Ohio, US; abstract no. 29582, XP002024190 & JP 51 035 436 A (DAINIPPON JOCHUGIKU) 25 Mars 1976
- PESTICIDE SCIENCE, vol. 8, no. 3, 1977, BARKING GB, pages 274-278, XP002024187 B.B.BROWN ET AL.: "Transparent Emulsions of Pyrethroids"

## Description

La présente invention concerne une composition aqueuse destinée à lutter contre les insectes volants et rampants (mouches, moustiques et blattes) présents dans des locaux à usage d'habitation ou autres, et à empêcher également la prolifération des ectoparasites dans lesdits locaux.

Elle vise également la préparation et l'utilisation de cette composition.

Il est d'usage pour tuer tous genres d'insectes volants ou rampants ainsi que tous genres d'ectoparasites et acariens, présents à l'intérieur d'une habitation (sur les meubles, literie, tapis, ...), de pulvériser, dans les pièces de l'habitation, des produits insecticides conditionnés, notamment, sous forme d'aérosols.

Les aérosols classiques contiennent habituellement un mélange de produits insecticides, de solvants organiques, et de gaz propulseur sous pression.

Le gaz de propulsion dévoilé dans le document CHEMICAL ABSTRACTS, vol. 85, n0 5, 2 Août 1976 (Columbus, Ohio. US), Abtract N0 29582 et JP-A-51035436, pour une solution insecticide (constituée par de la tétraméthrine + resméthrine + pipéronyle butoxyde (PBO)) est du fluorocarbone et du diméthyl-éther.

Selon le document DATA-BASE WPI Week 7132 (Derivent Publications Ltd., London, GB) AN 71-53154S (32) et JP-A-46 028 440, le mélange Pyréthrinoïdes + phthalthrine + PBO + Tension actif + solvant aromatique (isopropylalcool) + eau est propulsé par du diméthyl-éther.

De façon plus courante et selon le document DE-A- 2.704.066, le gaz de propulsion est de type classique "connu en soi".

L'utilisation de ces gaz propulseurs traditionnels (type butane, propane, fluorocarbone, diméthyléther,...) ont notamment pour inconvénients :
- de présenter une certaine toxicité pour les utilisateurs et l'environnement ;
- de provoquer, pendant l'utilisation de ces aérosols, des risques très importants d'inflammabilité et d'explosion, surtout si cette utilisation est opérée dans des volumes restreints et mal aérés en présence d'une source quelconque incandescente (de multiples accidents ont été observés ces dernières années).

Par ailleurs, sous l'effet de la chaleur, le risque d'auto-explosion dû à la présence de ces gaz comprimés est amplifié par leurs caractères inflammables et peut être à l'origine de déclenchement d'incendie.

D'autre part, l'enseignement théorique déduit de la combinaison des documents suivants EP-A- 0 327 467, CN-A-8703100 et GB-A- 2 058 569, révèle la composition insecticide suivante constituée par :
- de la cyperméthrine et de la tétraméthrine ;
- du pipéronyle butoxide
- un mélange de tension actifs dont deux esters d'acide gras et de polyglycol.

Toutefois, la solubilisation de ces composés organiques hydrophobes est rendue possible par l'addition de solvants organiques.

En effet, selon le document CN A 8703100, les pyréthrinoïdes (tétraméthrine + perméthrine) sont solubilisés avec le mélange de trois composés tensio-actifs (dont deux esters d'acide gras et de polyglycol) par l'addition d'octachlorodipropyl éther.

Selon le document EP-A-0 327 467, le solvant du mélange (cyperméthrine, tétraméthrine, pipéronyle butoxide) est un solvant aromatique tel que du xylène, ou un mélange de composants aromatiques, ...

Il s'agit également d'un solvant aromatique nécessaire pour la solubilisation du mélange de pyréthrinoïdes synthétiques avec des huiles végétales polyoxyéthylénées dévoilé dans le document GB-A-2 058 569.

Or, la présence importante de solvants organiques dans les compositions insecticides à vaporiser, à pulvériser ou à nébuliser, engendre notamment les inconvénients suivants :
- la composition insecticide devient encore plus inflammable et explosive ;
- elle devient irritante pour les muqueuses, piquant les yeux et la gorge de l'utilisateur ou des personnes présentes dans la pièce à traiter et à déparasiter ;
- elle présente un certain caractère de toxicité pour l'homme et les animaux domestiques ;
- elle peut tacher le mobilier, les tissus d'ameublement, etc.
- elle peut altérer les revêtements en plastiques ou en Plexiglass ;
- elle présente certains caractères phytotoxiques.

Selon le document US-A-4 195 083, on pourrait renoncer à l'addition de solvant lorsque les composés "pesticides" sont sous forme liquide. Toutefois, l'émulsion ainsi formée avec de l'eau est une émulsion blanche de particules grossières peu propice à être utilisée dans des aérosols et/ou pulvérisateurs, atomiseurs, nébuliseurs.

Selon le document EP A-149 051, la tendance actuelle serait de remplacer les solvants par l'eau. Ce document cite, dans ce sens, plusieurs documents (à savoir : DE-OS-3011611, EP-A-074329, EP-A-062181) concernant des solutions ou des émulsions qui ne sont pas suffisamment stables pour être utilisables dans des pulvérisateurs ou vaporisateurs.

En effet, selon le document DE-OS-3011611, on additionne, pour la solubilisation des principes actifs, des agents épaississants qui n'empêchent pas la sédimentation de ces derniers si la solution est diluée dans l'eau.

Selon le document EP-A-074329, les concentrés de principes actifs, dilués avec de l'eau, donnent des émulsions ou des dispersions "relativement" stables.

Selon le document EP-A-062181, les émulsions ne sont pas des solutions claires.

Il est également mentionné, dans le document EP-A-149051, que des systèmes clairs peuvent être obtenus par l'utilisation d'émulsionnants non ioniques particuliers sans qu'il ne soit précisé la structure de ces émulsionnants ni le document qui les décrit.

Le document K.NAUMANN "Synthetic Pyrethroid Insecticides : Structures and Properties, vol. 4", 1990, SPRINGER, BERLIN, DE Chapter 3.4 "Factors Enhancing the Action of Pyrethroids Against Insects", proscrit également l'utilisation de solvant organique et préconise celle de l'eau comme "solvant" des compositions insecticides sans donner pour autant d'indication sur les proportions adéquates des composés pyréthrinoïdes et autres, donnant une composition insecticide stable dans l'eau. Or, il est connu que les solutions claires dans l'eau de pyréthrinoïdes sont obtenues uniquement, lorsqu'elles sont préparées de façon extemporannée.

Le document DE-A-2 704 066 dévoile, dans ce sens, une composition "concentré d'émulsion" constituée par des pyréthrinoîdes naturels ou synthétiques et des tensio-actifs, et dans laquelle l'eau peut être additionnée pour les diluer. Toutefois, il n'est pas indiqué que l'émulsion obtenue correspond à une microémulsion stable dans le temps, ni quel est son procédé de fabrication.

Pour améliorer la stabilité du mélange pyréthrinoïdes dans l'eau dans des conteneurs en PVC, il est proposé par le document EP-A-0 215.303, d'additionner des tensio actifs non ioniques.

Cependant, la stabilité de cette composition est mesurée par rapport au support dans lequel elle est logée, à savoir, le PVC.

Aucun de ces documents ne dévoile des compositions insecticides aqueuses stables dans l'eau pulvérisable.

Un objet de l'invention est donc de remédier aux inconvénients susmentionnés des compositions insecticides et de leur utilisation dans des aérosols classiques en proposant une composition aqueuse stable pouvant avantageusement être contenue soit dans le sac ou poche d'un aérosol de type "EP SPRAY SYSTEM" renfermant de l'air comprimé soit dans un aérosol de type traditionnel utilisant, comme gaz comprimé ininflammable propulseur, de l'air comprimé ou de l'azote, soit encore dans un simple pulvérisateur manuel.

Selon l'invention, ce but est atteint grâce à une composition aqueuse remarquable par le fait qu'elle comporte, au moins deux pyréthrinoïdes (la tétraméthrine et perméthrine et/ou la cyperméthrine), un ou plusieurs tensio actifs à savoir un dérivé de condensation de l'oxyde d'éthylène et le cas échéant, un ester d'acide gras et de polyglycol et du butoxyde de piperonyle, dans les proportions suivantes :
- 0,10 à 0,60 % de tétraméthrine
- 0,15 à 0,30 % de perméthrine
- 0,50 à 3,00 % de butoxyde de pipéronyle
- 10 à 20 X de tensio-actifs
- eau déminéralisée QSP 100 %

Grâce aux proportions particulières des différents composants de cette composition insecticide et parasiticide, les pyréthrinoïdes (ou principes actifs) sont contenus dans des microvésicules (formées par les Tensio actifs) dispersées dans l'eau, ce qui forme une microémulsion. En outre, le butoxyde de pipéronyle présent à cette concentration potentialise l'activité des pyréthrinoïdes et en augmente ainsi l'efficacité biologique, tout en réalisant de substantielles économies sur le prix de revient de la composition en formulation.

La composition selon l'invention sous forme de microémulsion stable dans l'eau, procure les avantages suivants :
- la structure chimique des principes actifs contenus dans les microvésicules de tensio-actifs (ou TA) n'est pas altérée et leurs propriétés insecticides restent alors intactes ;
- les microvésicules n'ont pas tendance à la coalescence (alors que c'est le cas pour Les macroémulsions formées de macrovésicules), de sorte que le système est thermodynamiquement stable.
   Un avantage majeur de La présente invention engendré par la stabilité et la limpidité de la composition insecticide est qu'elle peut être propulsée grâce à des aérosols type "EP SPRAY SYSTEM" ou traditionnels ainsi que par l'utilisation de pulvérisateurs mécaniques évitant ainsi Les risques de pollution, d'explosion, d'auto-inflammation que présentent les aérosols contenant des solvants organiques et des gaz propulseurs explosifs et inflammables (type butane, propane).
   L'excipient de la microémulsion étant de l'eau, cela entraîne également les avantages suivants de La composition selon l'invention ;
- absence de toxicité ;
- elle ne tache pas les meubles ni les habits ;
- elle est incolore et sans odeur ;
- elle ne pique pas les yeux, ni les muqueuses ;
- elle évite les risques d'auto-inflammation.
- elle ne présente aucun risque pour les manipulations pendant sa fabrication ;
- elle ne présente aucun risque d'utilisation (même pour les enfants en bas âge).

Selon une autre caractéristique de l'invention, ladite composition aqueuse selon l'invention renferme également de la cyperméthrine (agent de mortalité très efficace pour les insectes rampants) a une concentration comprise entre 0,5 à 3 X.

D'autre part, le procédé de fabrication de cette composition selon l'invention est simple, aisé et rapide à mettre en oeuvre, contrairement à La préparation d'émulsion de type huile dans l'eau des systèmes antérieurs qui est délicate et longue. En effet, cette dernière nécessite l'addition très lente et sous agitation de la phase organique à la phase aqueuse.

Les buts, caractéristiques et avantages ci-dessus et d'autres encore ressortiront mieux de la description qui suit.

La composition aqueuse selon l'invention comprend, en combinaison, au moins deux pyréthrinoïdes et au moins un agent tensio-actif, non ionique, constitué par un dérivé de condensation à partir de l'oxyde d'éthylène.

Les pyréthrinoïdes choisis sont, d'une part, de la tétraméthrine dont la formule IUPAC est (1 RS)-cis, trans diméthyl-2,2 (méthyl-2prop-1-enyl)-3 cyclopropanecarboxylate de cyclohexène-1 dicarboximido-1,2-méthyle et, d'autre part, un dérivé phénoxybenzyloxycarbonylé tel que la perméthrine, décaméthrine, la cyperméthrine, etc... De façon préférentielle, il s'agit de la perméthrine qui correspond à un mélange de 25 isomères cis pour 75 isomères trans de (1 RS)-cis, trans dichloro-2,2-vinyl) 3diméthyl 2,2 cyclopropanecarboxylate de phénoxy-3-benzyle.

La proportion en principes actifs de ladite composition aqueuse selon l'invention est :
- 0,10 à 0,60 % de tétraméthrine
- 0,15 à 0,30 % de perméthrine

Elle comprend également un synergiste des pyréthrinoïdes, à savoir du butoxyde de pipéronyle.

Ce dernier est présent de 0,50 à 3 % dans la composition insecticide et parasiticide selon l'invention.

Pour une composition insecticide destinée plus spécialement destinée à lutter contre les insectes rampants, on additionne comme dérivé phénoxybenzyloxycarbonylé, de la cyperméthrine, dont la formule IUPAC est (1RS)cis, trans(dichloro2,2vinyl)-3diméthyl-2,2 cyclopropanate carboxylate de (RS)-alpha-cyanophénoxy-3-benzyle.

L'association de la tétraméthrine et de la cyperméthrine aux spectres insecticides complémentaires constitue un redoutable produit de destruction de parasites (présents dans Les habitations) et d'insectes avec un pouvoir de rémanence très important de plusieurs semaines. Cette action est, de plus, synergisée par le butoxyde de pipéronyle.

La proportion de cyperméthrine est de 0,30 à 0,60 % dans la composition parasiticide et insecticide selon l'invention.

L'excipient ou véhicule de cette composition insecticide selon l'invention est de l'eau déminéralisée.

Pour disperser de façon uniforme les principes actifs (la tétraméthrine et la perméthrine et, le cas échéant, la cyperméthrine) dans l'excipient, on utilise au moins un dérivé de condensation à partir de l'oxyde d'éthylène comme, par exemple, un dérivé de condensation de l'oxyde d'éthylène sur l'huile de ricin ou sur le dodécanol.

On obtient ainsi une microémulsion dont les vésicules contenant les principes actifs (les pyréthrinoïdes) ont un diamètre ne dépassant pas les 20 microns ce qui donne une microémulsion claire et stable dans le temps.

De façon avantageuse, un deuxième tensio-actif constitué par des esters d'acide gras et de polyglycol est additionné. La proportion de tensio-actifs dans la composition insecticide et parasiticide selon l'invention est comprise entre 10 et 20 %.

La composition selon l'invention comporte, par conséquent, les proportions ci-après des composants susmentionnés, à savoir :
- tétraméthrine 0,10 à 0,60 %
- perméthrine 0,15 à 0,30 %
- butoxyde de pipéronyle 0,50 à 3 %
- tensio actifs 10 à 20 %
- eau déminéralisée QSP 100 %.

Selon la destination de la composition insecticide selon l'invention, on peut substituer, à la perméthrine, un autre dérivé phénoxybenzyloxycarbonylé, de préférence constitué par de la cyperméthrine à 0,30 - 0,60 % ou tout autre agent insecticide spécifique à certains types d'insectes ou on peut incorporer à la fois la perméthrine et la cyperméthrine.

Le procédé de préparation de la composition suivant l'invention consiste à :
- chauffer au préalable entre 40 degrés C et 50 degrés C, la perméthrine,
- dissoudre la tétraméthrine dans le butoxyde de pipéronyle,
- mélanger la perméthrine, Le mélange tétraméthrine-butoxyde de pipéronyle, la cyperméthrine (le cas échéant), avec les tensio-actifs,
- additionner la quantité d'eau (QSP 100),
- mettre ce mélange sous agitation,
- filtrer et conditionner.

Selon le mode d'utilisation avantageux, objet de la présente invention, pour un usage ménager dans les locaux d'habitation ou autres, la composition aqueuse selon l'invention est répandue sans qu'aucun gaz ne soit libéré dans l'atmosphère.

En effet, cette composition insecticide peut :
- soit être introduite dans Le sac d'un aérosol de type "EP SPRAY SYSTEM". On obtient ainsi une vaporisation de La composition par l'action de la compression due à L'air comprimé se trouvant entre Le sac contenant La micro émulsion insecticide et le corps de l'aérosol.
- soit être introduite dans un vaporisateur manuel simple.

## Revendications

1. Composition comportant un ou plusieurs tensio actifs à savoir un dérivé de condensation de l'oxyde d'éthylène et le cas échéant, un ester d'acide gras et de polyglycol, **caractérisée en ce qu'**elle est constituée de :
- 0,10 à 0,60 % de tétraméthrine
- 0,15 à 0,30 % de perméthrine
- 0,50 à 3,00 % de butoxyde de pipéronyle
- 10 à 20 % de tensio-actifs
- eau déminéralisée QSP 100 %
et **en ce que** cette composition est pulvérisable au moyen d'un aérosol à gaz comprimé ininflammable, comme par exemple L'azote, ou bien, au moyen d'un simple pulvérisateur.

2. Composition comportant un ou plusieurs Tensio- actifs à savoir un dérivé de condensation de l'oxyde d'éthylène et le cas échéant, un ester d'acide gras et de polyglycol, **caractérisée en ce qu'**elle est constituée de :
- 0,10 à 0,60 % de tétraméthrine
- 0,15 à 0,30 % de perméthrine
- 0,30 à 0,60 % de cyperméthrine
- 0,50 à 3,00 % de butoxyde de pipéronyle
- 10 à 20 % de tensio-actifs
- eau déminéralisée QSP 100 %
et **en ce que** cette composition est pulvérisable au moyen d'un aérosol à gaz comprimé ininflammable, comme par exemple l'azote, ou bien, au moyen d'un simple pulvérisateur.

3. Composition, selon l'une des revendications 1 ou 2, **caractérisée en ce qu'**elle est sous forme de microémulsion stable dont les microvésicules ont un diamètre inférieur ou égal à 20 micromètres.

4. Procédé pour la préparation de la composition, selon l'une quelconque des revendications 1 ou 2, **caractérisé en ce que** :
- l'on chauffe au préalable entre 40 degrés C et 50 degrés C la perméthrine et on dissout la tétraméthrine dans le butoxyde de pipéronyle ;
- puis on mélange la perméthrine, le mélange tétraméthrine-butoxyde de pipéronyle, la cyperméthrine (le cas échéant), avec Les tensio-actifs ;
- on agite ce mélange jusqu'à dissolution complète ;
- on additionne la quantité d'eau (QSP 100 %) ;
- on met ce mélange sous agitation ;
- on filtre et on conditionne.

5. Procédé d'utilisation de la composition, selon l'une quelconque des revendications 1 à 4, à des fins insecticides et à l'exclusion de méthode de traitement thérapeutique, **caractérisé en ce que** cette composition est pulvérisée au moyen d'un aérosol à gaz comprimé ininflammable, comme par exemple l'azote, ou bien, au moyen d'un simple pulvérisateur.

## Patentansprüche

1. Zusammensetzung, enthaltend ein oder mehrere Tenside, nämlich ein Ethylenoxid-Kondensationsderivat und erforderlichenfalls einen Fettsäure- und Polyglykolester, **dadurch gekennzeichnet, daß** sie aus
- 0,10 bis 0,60 % Tetramethrin
- 0,15 bis 0,30 % Permethrin
- 0,50 bis 3,00 % Piperonylbutoxid
- 10 bis 20 % Tenside
- vollentsalztem Wasser Restmenge auf 100 %
gebildet wird, und **dadurch, daß** diese Zusammensetzung mittels eines Aerosols mit nicht brennbarem komprimierten Gas, wie beispielsweise Stickstoff, oder mittels eines einfachen Zerstäubers zerstäubt werden kann.

2. Zusammensetzung, enthaltend ein oder mehrere Tenside, nämlich ein Ethylenoxid-Kondensationsderivat und erforderlichenfalls einen Fettsäure- und Polyglykolester, **dadurch gekennzeichnet, daß** sie aus
- 0,10 bis 0,60 % Tetramethrin
- 0,15 bis 0,30 % Permethrin
- 0,30 bis 0,60 % Cypermethrin
- 0,50 bis 3,00 % Piperonylbutoxid
- 10 bis 20 % Tenside
- vollentsalztem Wasser Restmenge auf 100 %
gebildet wird, und **dadurch, daß** diese Zusammensetzung mittels eines Aerosols mit nicht brennbarem komprimierten Gas, wie beispielsweise Stickstoff, oder mittels eines einfachen Zerstäubers zerstäubt werden kann.

3. Zusammensetzung nach einem der Ansprüche 1 oder 2, **dadurch gekennzeichnet, daß** sie in Form einer stabilen Mikroemulsion vorliegt, deren Mikrobläschen einen Durchmesser bis maximal 20 Mikrometer aufweisen.

4. Verfahren zur Herstellung der Zusammensetzung nach einem der Ansprüche 1 oder 2, **dadurch gekennzeichnet, daß**:
- Permethrin vorab auf 40 - 50 °C erwärmt und Tetramethrin in Piperonylbutoxid aufgelöst wird:
- dann Permethrin und die Mischung aus Tetramethrin-Piperonylbutoxid, (erforderlichenfalls) Cypermethrin, mit den Tensiden gemischt wird;
- diese Mischung bis zur vollständigen Auflösung durchgerührt wird;
- die Wassermenge zugesetzt wird (Restmenge auf 100%);
- die Mischung durchgerührt wird;
- gefiltert und abgepackt wird.

5. Verfahren zur Herstellung der Zusammensetzung nach einem der Ansprüche 1 bis 4, zur Verwendung als Insektizid unter Ausschluß eines Verfahrens zur therapeutischen Behandlung, **dadurch gekennzeichnet, daß** diese Zusammensetzung mittels eines Aerosols mit nicht brennbarem komprimiertem Gas, wie beispielsweise Stickstoff, oder mittels eines einfachen Zerstäubers zerstäubt werden kann.

## Claims

1. Composition comprising one or a plurality of surfactants, i.e. a derivative of condensation of ethylene oxide, and, if applicable, an ester of fatty acid and polyglycol, **characterised in that** it consists of:
- 0.10 to 0.60% tetramethrine
- 0.15 to 0.30% permethrine
- 0.50 to 3.00% piperonyl butoxide
- 10 to 20% surfactants
- demineralised water QSP 100%
and **in that** this composition can be sprayed by means of an aerosol of a non-inflammable compressed gas, such as nitrogen, or by means of a simple atomiser.

2. Composition comprising one or a plurality of surfactants, i.e. a derivative of condensation of ethylene oxide, and, if applicable, an ester of fatty acid and polyglycol, **characterised in that** it consists of:
- 0.10 to 0.60% tetramethrine
- 0.15 to 0.30% permethrine
- 0.30 to 0.60% cypermethrine
- 0.50 to 3.00% piperonyl butoxide
- 10 to 20% surfactants
- demineralised water QSP* 100%
and **in that** this composition can be sprayed by means of an aerosol of a non-inflammable compressed gas, such as nitrogen, or by means of a simple atomiser.

3. Composition according to claim 1 or claim 2, **characterised in that** it is in the form of a stable microemulsion, the micro-vesicles of which have a diameter of 20 µm or less.

4. Method for preparation of the composition according to either of claims 1 and 2, **characterised in that**:
- the permethrine is previously heated to between 40°C and 50°C, and the tetramethrine is dissolved in the piperonyl butoxide;
- the permethrine, the mixture of tetramethrinepiperonyl butoxide, and the cypermethrine (if applicable) are then mixed with the surfactants;
- this mixture is then agitated until complete dissolving takes place;
- the quantity of water is added (QSP* 100%);
- this mixture is agitated; and
- it is filtered and conditioned.

5. Method for use of the composition according to any one of claims 1 to 4 for insecticide purposes, and with the exclusion of a therapeutic treatment method, **characterised in that** this composition is sprayed by means of an aerosol of a non-inflammable compressed gas, such as nitrogen, or by means of a simple atomiser.
